# EUROPÄISCHE PATENTSCHRIFT

(11) **EP 1 262 396 B1**
(45) Veröffentlichungstag und Bekanntmachung des Hinweises auf die Patenterteilung: **11.05.2005**
(21) Anmeldenummer: 02018689.6
(22) Anmeldetag: 27.02.1998
(51) Int. Cl.: B62D 21/11, B60G 7/02, B60G 3/20

(54) **Hilfsrahmen für die Vorder- oder Hinterradaufhängung eines Kraftfahrzeuges**
Subframe for the front or rear wheel suspension of a motor vehicle
Berceau auxiliaire pour la suspension de roue avant ou arrière d'un véhicule automobile

(30) Priorität: 01.03.1997 DE 19708421; 01.03.1997 DE 19708422
(43) Veröffentlichungstag der Anmeldung: 04.12.2002
(62) Teilanmeldung aus: 98916806.7
(73) Patentinhaber: ADAM OPEL AG, 65423 Rüsselsheim (DE)
(72) Erfinder: Pelz, Gerhard, Dipl.-Ing. (FH), 55576 Welgesheim (DE); Denk, Peter, 64572 Büttelborn/Klein-Gerau (DE); Olsson, Gunnar, Dr., 46153 Trollhättan (SE); Schmidt, Rudolf, 65428 Rüsselsheim (DE)

(56) Entgegenhaltungen:
- EP-A- 0 307 547
- WO-A-96/00661
- WO-A-96/32312
- WO-A-97/00176
- DE-A- 3 927 987
- DE-A- 3 942 794
- DE-C- 3 927 924
- PATENT ABSTRACTS OF JAPAN vol. 1995, no. 05, 30. Juni 1995 (1995-06-30) & JP 07 032831 A (TOYOTA MOTOR CORP), 3. Februar 1995 (1995-02-03)
- PATENT ABSTRACTS OF JAPAN vol. 1996, no. 04, 30. April 1996 (1996-04-30) & JP 07 315245 A (TOYOTA MOTOR CORP), 5. Dezember 1995 (1995-12-05)
- PATENT ABSTRACTS OF JAPAN vol. 1996, no. 09, 30. September 1996 (1996-09-30) & JP 08 127360 A (NISSAN MOTOR CO LTD), 21. Mai 1996 (1996-05-21)

## Beschreibung

Die Erfindung bezieht sich auf einen Hilfsrahmen für die Vorder- oder Hinterradaufhängung eines Kraftfahrzeuges gemäß dem Oberbegriff des Anspruches 1.

Ein derartiger Hilfsrahmen ist Gegenstand der DE 39 27 987. Die Doppelarme bestehen jeweils aus zwei Blechschalen, die zu einem Hohlkörper zusammengesetzt sind. Ein vorderes und ein hinteres Querteil verbinden die beiden Doppelarme, wobei die Enden der Querteile jeweils die Basis eines Doppelarmes auf einem kurzen Stück zangenartig erfassen.

Ein Hilfsrahmen ist auch in der DE 39 42 794 A1 beschrieben. Die Arme sind einzeln an einem Zentralkörper befestigt und bilden in der Draufsicht ein Kreuz. Die freien Enden der Arme sind an zwei Längsträgern des Fahrzeugaufbaus befestigt. Das Kreuz bildet eine Versteifung, mit der eine Erhöhung der Quersteifigkeit erreicht werden soll. Das Kreuz verhindert, dass die beiden Längsträger unter Last seitlich verschoben werden, aber nicht, dass sie in eine windschiefe Lage zueinander gebracht werden. Eine Torsion des Hilfsrahmens um eine Fahrzeugquerachse lässt sich mit dieser Anordnung somit nicht vermeiden, da die Befestigung der Arme untereinander jeweils mittig erfolgt.

Aus DE 41 35 361 A1 ist ein weiterer Hilfsrahmen bekannt, bei dem die beiden vorderen Arme und die beiden hinteren Arme jeweils ein Teil bilden, das aus zwei Halbschalen hergestellt ist. Die beiden Doppelarme sind über zwei kurze Rohre miteinander verbunden, so dass sich ein in etwa rechteckiger Rahmen bildet. Die beiden Rohre sind durch die Hohlkörper hindurchgeführt und mit ihnen verschweißt. Dieser Hilfsrahmen ist zwar torsionssteifer als der Hilfsrahmen nach der DE 39 42 794 A1, ist aber komplizierter herzustellen.

Die Erfindung beruht daher auf der Aufgabe, einen torsionssteifen Hilfsrahmen zu entwickeln, der leicht herzustellen ist und darüber hinaus möglichst flach baut.

Dazu wird vorgeschlagen, dass der Kasten zur Erhöhung der Torsionssteifigkeit die Form eines langgestreckten Quaders aufweist, der im Querschnitt geschlossen ist. Um eine gute Einpassung der Bogenabschnitte zu erzielen, werden die seitlichen Öffnungen trichterförmig ausgebildet.

Die Doppelarme werden vorzugsweise aus einem Rohr geformt, das mittels einer Biegemaschine leicht auf die für das Fahrzeug vorgesehene Form gebracht werden kann. Eine besonders gute Verbindung zwischen dem Rohr und dem Kasten erhält man, wenn die Höhe des Kastens der Rohrdicke entspricht und das Rohr über die gesamte Länge seines Bodens bis zur Rohrachse in die Öffnung eintaucht. Der obere und der untere Rand des Kastens verlaufen dann tangential in die Mantelfläche des Rohres ein, so dass die beiden Teile spannungsfrei miteinander verschweißt werden können.

Die Arme werden von Lenkerkräften freigestellt, wenn die Radlenker unmittelbar am Zentralkörper angelenkt werden. Insbesondere bei einem Doppelquerlenker mit einem oberen und einem unteren Lenker können die Lagerböcke für die Aufnahme der Anlenkung auf der Oberseite und auf der Unterseite des Zentralkörpers angeordnet werden.

Es bietet sich an, die Lagerböcke nicht als Einzelteile an dem Zentralkörper zu befestigen, sondern die Lagerböcke unmittelbar am Zentralkörper anzuformen. Am Zentralkörper können weiterhin Lagerungen für einen Stabilisator vorgesehen werden.

Da die Konstruktion des Hilfsrahmens unabhängig vom verwendeten Material eine ausreichende Steifigkeit gewährleistet, kann er aus Leichtmetall, z. B. Aluminium gefertigt werden. Dies hat den Vorteil, dass der Hilfsrahmen eine ausreichende Steifigkeit aufweist und trotzdem relativ leicht ist.

Mit einem erfindungsgemäßen Hilfsrahmen kann die im folgenden beschriebene Hinterradaufhängung, die selbst nicht Gegenstand des Patents ist, realisiert werden. Die Beschreibung soll lediglich dem besseren Verständnis der Erfindung dienen. Die Hinterradaufhängung besteht aus einem oberen und einem unteren Querlenker, einem quer angeordneten Kompensationslenker und einem Längslenker für die Mehrfachanlenkung eines Achsträgers an der Fahrzeugkarosserie, mit einer Karosserieabstützung bestehend aus einer Feder und einem Dämpfer, wobei das untere Befestigungsauge des Dämpfers unmittelbar am Achsträger gelagert ist, wobei der obere Querlenker, bezogen auf die Fahrtrichtung, vor dem unteren Querlenker angeordnet wird und die Feder am unteren Querlenker nahe dem Achsträger abgestützt wird. Damit wird als erstes erreicht, dass die untere Abstützung der Feder weit nach unten gesetzt wird, so dass die obere Abstützung unter Berücksichtigung der notwendigerweise vorzusehenden Federwege unterhalb des Kofferraumbodens bzw. Laderaumbodens angeordnet werden kann.

Durch den Versatz des oberen Lenkers gegenüber dem unteren Lenker wird zweitens ein ausreichend großer Einbauraum für die Feder geschaffen, so dass z. B. eine kurze Tonnenfeder mit progressiver Federcharakteristik (Miniblockfeder) eingesetzt werden kann. Die Anordnung gewährleistet weiterhin, dass genügend Einbauraum verbleibt, um den Bremssattel einer Scheibenbremse im hinteren Winkelbereich des Achsträgers befestigen zu können.

Die gewählte Anordnung hat weiterhin den Vorteil, dass die Wegübersetzung für die Feder nahe 1 gehalten werden kann, da der Radaufstandspunkt des am Achsträger gehaltenen Rades und die Federabstützung in etwa gleich weit von der Schwenkachse der Radaufhängung an der Karosserie entfernt sind.

Um den oberen Anlenkpunkt des Dämpfers möglichst niedrig anordnen zu können und so einen bis zum Radgehäuse durchgehenden Laderaumboden realisieren zu können, wird vorgeschlagen, den unteren Anlenkpunkt am Achsträger auf Höhe des Anlenkpunktes für den unteren Querträger vorzusehen. Gleichzeitig kann der Dämpfer nahe dem Achsträger angeordnet werden, so dass der Laderaum, falls sein Boden unterhalb des oberen Anlenkpunktes des Dämpfers verläuft, nur wenig seitlich eingeschränkt werden muss.

Für die Kinematik der Radaufhängung ist es von Vorteil, wenn sich der untere Querlenker hinter der Drehachse im Achsträger und der obere in etwa oberhalb der Drehachse im Achsträger befindet. Auf diese Weise lässt sich die Lage der Schwenkachse, die u.a. von einer gedachten mittleren karosserieseitigen Anlenkung der Querlenker bestimmt wird, besser den jeweiligen Gegebenheiten des Fahrzeuges anpassen.

Vorzugsweise wird der Dämpfer zwischen dem Kompensationslenker und dem oberen Querlenker angeordnet.

Die Querlenker sowie der Kompensationslenker werden karosserieseitig an einem Hilfsrahmen angelenkt. Dieser wird über vier Befestigungspunkte an der Karosserie befestigt. Auf einer Fahrzeugseite sind jeweils zwei Befestigungspunkte hintereinander und in etwa auf halbem Abstand zwischen dem Achsträger und der Anlenkung des oberen unteren Querlenkers am Hilfsrahmen angeordnet. Die karosserieseitige Anlenkung des Kompensationslenkers am Hilfsrahmen erfolgt in etwa unterhalb der vorderen Befestigung des Hilfsrahmens an der Karosserie.

Ein Stabilisator verläuft vor dem Hilfsrahmen und wird an seinen Enden jeweils mit dem oberen Querlenker über einen in Längsrichtung des Lenkers ausschwenkbaren kurzen Pendelarm angelenkt.

Die beschriebene Anordnung der Radaufhängung am Hilfsrahmen hat den Vorteil, dass die Radaufhängung weitgehend vormontiert und zusammen mit dem Hilfsrahmen an der Karosserie befestigt werden kann. Lediglich für die karosserieseitige Anlenkung des Längslenkers ist ein gesonderter Arbeitsgang notwendig.

Die Erfindung soll im folgenden anhand eines Ausführungsbeispiels näher erläutert werden, das in drei Zeichnungen dargestellt ist. Dabei zeigen
- Fig. 1:: eine Draufsicht und die
- Fig. 2:: eine Rückansicht der Radaufhängung mit Teilen des Hilfsrahmens, sowie

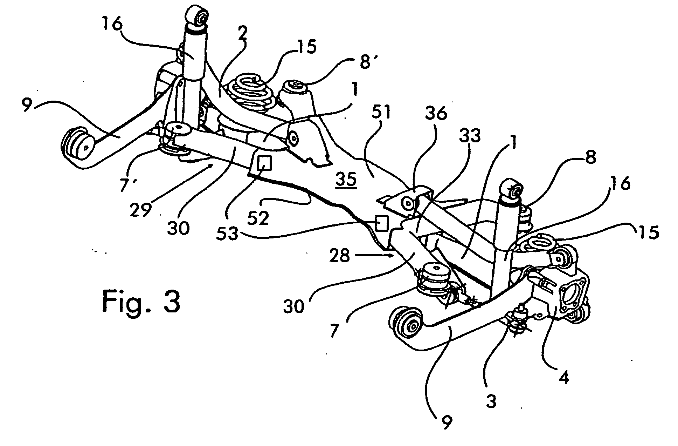

- Fig. 3:: eine perspektivische Darstellung einer Hinterachse mit Hilfsrahmen.

Die Radaufhängung besteht aus einem unteren Querlenker 1, einem oberen Querlenker 2 sowie einem quer angeordneten Kompensationslenker 3 und einem Längslenker 9. Die drei quer angeordneten Lenker erstrecken sich parallel zueinander und in etwa parallel zur Fahrzeughorizontalen. Die Anlenkpunkte 11, 12 , 13 der Lenker am Achsträger 4 bilden in etwa ein gleichschenkliges Dreieck, wobei die Anlenkung 12 des oberen Querlenkers 2 oberhalb der Radachse 5 und die Anlenkungen 11, 13 des unteren Querlenkers 1 und des Kompensationslenkers 3 unterhalb zu beiden Seiten der Radachse 5 des Achsträgers 4 erfolgen.

Karosserieseitig sind die Querlenker an einem Hilfsrahmen 6 befestigt, der weiter unten näher beschrieben werden soll. Dieser wird über vier Befestigungspunkte 7, 8; 7', 8', je zwei auf jeder Fahrzeugseite, am Karosserieboden befestigt.

Der untere Querlenker 1 und der obere Querlenker 2 sind an der Ober- und Unterseite des Hilfsrahmens 6 gegenüber den Befestigungspunkten 7, 8 nach innen versetzt angelenkt (Anlenkungen 21, 22). Die karosserieseitige Anlenkung 23 des Kompensationslenkers 3 erfolgt in etwa unterhalb des vorderen Befestigungspunktes 7.

Die Befestigungspunkte 7, 8 liegen etwa hintereinander auf halber Breite zwischen dem Achsträger und den karosserieseitigen Anlenkungen 21, 22 des unteren Querlenkers 1 und des oberen Querlenkers 2. Der untere und der obere Querlenker 1, 2 werden beidseitig jeweils in längs zur Fahrzeuglängsachse ausgerichteten Dämpfungsbuchsen gelagert. Das gummiartige Material in den Buchsen gewährleistet zum einen eine Körperschallisolierung und zum anderen eine gewisse Nachgiebigkeit der Anlenkung, so dass ein Verschwenken des Achsträgers 4 durch eine Raumkurve erfolgen kann, deren Lage im Bezug zur Karosserie insbesondere vom Kompensationslenker 3 und einem Längslenker 9 im Zusammenwirken mit den Querlenkern 1, 2 bestimmt wird.

Bei dem Längslenker 9 handelt sich um ein schwertartiges verwindungsweiches Blech , das vertikal zum Fahrzeug ausgerichtet ist und damit Verbiegungen in der Horizontalebene, aber nicht in der Vertikalebene zulässt. Es hat insbesondere die Aufgabe, den Vorlauf des Hinterrades beim Einfedern zu kontrollieren. Der Längslenker 9 ist fest mit dem Achsträger 4 verbunden und senkrecht zur Fahrzeuglängsachse verschwenkbar an der Karosserie gelagert.

Demgegenüber hat der Kompensationslenker 3 die Aufgabe, den Sturzverlauf beim Einfedern zu kontrollieren. Dazu ist der Kompensationslenker 3 achsträgerseitig in einem Kugelgelenk und karosserieseitig in einer Dämpfungsbuchse gelagert.

Die Abstützung der Radaufhängung erfolgt mittels einer Feder 15 und eines Dämpfers 16. Die Feder 15 liegt auf einem Federteller 17 am unteren Querlenker nahe der achsträgerseitigen Anlenkung 21. Der obere Querlenker 2 verläuft vor dem von der Feder eingenommenen Raum.

Als Feder 15 wird eine Tonnenfeder mit progressiver Kennung vorgesehen. Diese baut flach und ragt nicht viel über den hinteren Befestigungspunkt 8 hinaus auf. Der Dämpfer 16 ist zwischen dem oberen Querlenker 2 und dem Kompensationslenker 3 nahe dem Achsträger 4 vorgesehen. Das untere Befestigungsauge 26 befindet sich auf derselben Höhe wie die achsträgerseitige Anlenkung 11 des unteren Querträgers 1.

Im Bereich des Dämpfers 16 wird auch das achsträgerseitige Ende des Längsträgers 9 am Achsträger 4 befestigt.

Die die Einfederung des Achsträgers 4 bzw. des daran befestigten Fahrzeugrades bestimmende Schwenkachse 25 verläuft zumindest für kleine Federwege durch eine von den karosserieseitigen Anlenkungen 21, 22 des oberen und unteren Querlenkers 1, 2 bestimmten mittleren Anlenkpunkt 20 sowie der karosserieseitigen Anlenkung 23 des Kompensationslenkers 3. Wie man leicht feststellen kann, sind die Abstände der Federabstützung sowie des mittleren Radaufstandspunktes 24 zur Schwenkachse 25 nicht sehr verschieden voneinander, so dass sich eine nahezu optimale Wegübersetzung für die Einfederung ergibt. Eine Anordnung der Feder koaxial zum Dämpfer - wie im Stand der Technik vorgeschlagen - ergäbe eine wesentlich schlechtere Wegübersetzung.

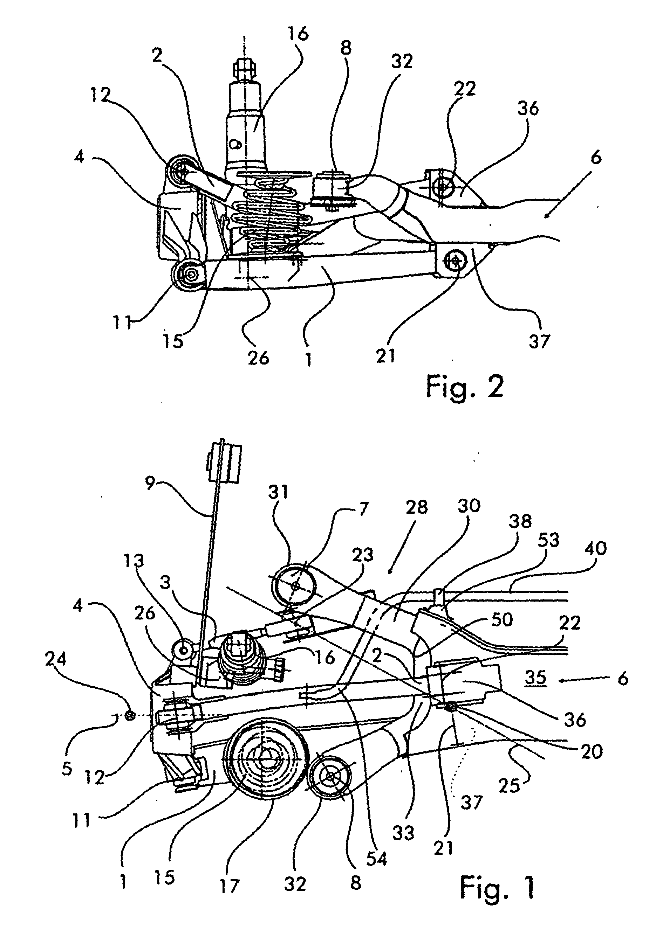

Der Hilfsrahmen 6, dessen linke Hälfte in Fig. 1 und 2 dargestellt ist und dessen rechte Hälfte spiegelbildlich zu der dargestellten Hälfte konstruiert ist, besteht aus zwei Doppelarmen 28, 29 auf jeder Fahrzeugseite. Ein Doppelarm 28 (bzw. 29) ist jeweils aus einem Rohr 30 gebildet, an dessen Enden kurze Zylinder 31, 32 zur Aufnahme von Dämpfungsbuchsen zur Bildung der Befestigungspunkte 7, 8 vorgesehen sind. In der Draufsicht hat jedes Rohr 30 in etwa die Form eines U, dessen Bogenabschnitt 33 zum Teil in einen stirnseitig offenen Kasten 35 eintaucht und mit ihm verschweißt ist. Der Kasten 35 bildet damit eine steife Verbindung zwischen dem linken und dem rechten Doppelarm 28, 29.

Der Kasten 35 weist einen geschlossenen Querschnitt auf und öffnet sich lediglich auf beiden Stirnseiten trichterförmig, um jeweils den Bogenabschnitt 33 des linken bzw. rechten Doppelarms 28, 29 aufzunehmen. Der Kasten ist etwas breiter als hoch, wobei die Höhe bestimmt wird durch den Durchmesser der für die Doppelarme verwendeten Rohre 30. Wie der Darstellung zu entnehmen ist, schmiegen sich die Rohre 30 in die offenen Stirnseiten ein und bilden somit die seitlichen Abschlüsse des Kastens 35.

Der Kasten 35 ist gleichzeitig Träger der Lagerböcke 36, 37 für die karosserieseitige Anlenkung 21, 22 des unteren Querlenkers 1 und des oberen Querlenkers 2. Der Lagerbock 36 für den oberen Querlenker 2 ist auf der Oberseite des Kastens 35 und der Lagerbock 37 für den unteren Querlenker 1 auf der unteren Seite des Kastens 35 angeordnet. Bei den Lagerböcken kann es sich um jeweils gesonderte Teile handeln, die am Kasten angeschweißt werden, oder aber um einstückig mit der oberen bzw. unteren Kastenwand ausgeführte Teile, die z. B. durch Pressformen aus der Kastenwand ausgebildet werden. Der Lagerbock 36 für den oberen Querlenker 2 ist etwa mittig angeordnet, während der Lagerbock 37 für den unteren Querträger seitlich hinten angeordnet ist, so dass die Seitenwand des Lagerbocks 37 in die hintere Wand des Kastens 35 übergeht.

Um das Gewicht des Hilfsrahmens klein zu halten, ist er insgesamt aus Aluminium hergestellt. Das betrifft sowohl die Rohre 30 als auch den Kasten 35 sowie die Zylinder 30, 31 und die Lagerböcke 36, 37.

An der in Fahrtrichtung nach vorne weisenden Wand des Kastens 35 sind Befestigungen 53 mit Führungen 38 für einen Stabilisator 40 (nur in Fig. 1 gezeigt) vorgesehen, wobei jeweils ein Ende 54 unter den vorderen Arm eines Doppelarms 28 hindurchgeführt und mittels eines kurzen Pendelarms an den mittleren Bereich des oberen Querlenkers 2 pendelnd angelenkt ist.

Mitentscheidend für die besondere Steifigkeit des Rahmens ist, dass jeweils der mittlere Abschnitt der U-förmigen Rohre 30, also der Bogenabschnitt 33, passend in eine der seitlichen Öffnung des Kastens 35 liegt, wobei die seitlichen Abschlusskanten 50 der oberen und der unteren Wand 51, 52 oberhalb und unterhalb der Rohrachse verlaufen, so dass die Wände tangential in das Rohr 30 übergehen. Daher ist die entlang der Abschlusskante 50 geführte Schweißnaht nahezu spannungsfrei. Insgesamt gesehen ergibt sich eine feste und spannungsfreie Verbindung zwischen dem Kasten 35 und den Rohren 30.

## Patentansprüche

1. Hilfsrahmen für die Vorder- oder Hinterradaufhängung eines Kraftfahrzeuges, der am Fahrzeugaufbau in mindestens vier Befestigungspunkten (7, 8) gelagert ist, wobei jeder Achsträger (4) mit wenigstens einem Lenker (1, 2) an den Hilfsrahmen angelenkt ist, bestehend aus vier paarweise zu jeder Fahrzeugseite von einem Zentralkörper (35) abstehenden und an ihm befestigten Armen (36, 37), deren freien Enden (31, 32) am Fahrzeugaufbau befestigt sind, wobei die beiden Arme eines Paares Teilabschnitte eines U-förmigen Doppelarmes (30) bilden, dessen Bogenabschnitt (33) am Zentralkörper (35) befestigt ist, und der Zentralkörper ein zu beiden Seiten hin offener Kasten (35) ist, wobei in die seitlichen Öffnungen jeweils ein Bogenabschnitt (33) eines Doppelarms (28, 29) eintaucht, **dadurch gekennzeichnet, dass** der Kasten (35) die Form eines langgestreckten Quaders aufweist, der im mittleren Bereich geschlossen ist und sich seitlich trichterförmig öffnet und dass die Doppelarme (28, 29) jeweils aus einem Rohr (30) gebildet sind, dass die Bogenabschnitte (33) über ihre gesamte Länge in die trichterförmige Öffnung bis zur Rohrachse eintauchen und die Höhe des Kastens (35) der Rohrdicke entspricht.

2. Hilfsrahmen nach Anspruch 1, **dadurch gekennzeichnet, dass** wenigstens ein am Hilfsrahmen angelenkter Lenker (1, 2) eines Achsträgers (4) am Zentralkörper (35) angelenkt ist.

3. Hilfsrahmen nach Anspruch 2, **dadurch gekennzeichnet, dass** jeder Achsträger (4) mit einem oberen (2) und einem unteren (1) Lenker am Hilfsrahmen (6) angelenkt ist, wobei ein Lagerbock (37) für den unteren Lenker (1) und ein Lagerbock (36) für den oberen Lenker (2) an der oberen Wand (51) bzw. an der unteren Wand (52) des als Kasten (35) ausgebildeten Zentralkörpers angeformt oder befestigt ist.

4. Hilfsrahmen nach einem der Ansprüche 1 bis 3, **dadurch gekennzeichnet, dass** Befestigungen (53) für einen Stabilisator (40) am Hilfsrahmen (6) vorgesehen sind.

5. Hilfsrahmen nach einem der Ansprüche 1 bis 4, **dadurch gekennzeichnet, dass** die Arme (28, 29) und der Zentralkörper (35) aus Aluminium hergestellt sind.

## Claims

1. Auxiliary frame for the front or rear wheel suspension of a motor vehicle, which is mounted on the vehicle body at at least four fastening points (7, 8), wherein each cross member (4) is linked by at least one control arm (1, 2) to the auxiliary frame, consisting of four arms (36, 37) which project in pairs from a central body (35) on each side of the vehicle and are attached to it and whose free ends (31, 32) are attached to the vehicle body, wherein the two arms of a pair form sections of a U-shaped double arm (30) whose curved section (33) is attached to the central body (35), and the central body is a box (35) open on both sides, wherein a curved section (33) of a double arm (28, 29) enters the side openings in each case, **characterised in that** the box (35) has the form of an elongate cuboid which is closed in the central region and opens in a funnel shape laterally and **in that** the double arms (28, 29) are in each case formed from a tube (30), **in that** the curved sections (33) enter the funnel-shaped opening up to the tube axis over their whole length and the height of the box (35) corresponds to the tube thickness.

2. Auxiliary frame according to claim 1, **characterised in that** at least one control arm (1, 2) of a cross member (4), which is linked to the auxiliary frame, is linked to the central body (35).

3. Auxiliary frame according to claim 2, **characterised in that** each cross member (4) is linked by an upper (2) and a lower (1) control arm to the auxiliary frame (6), wherein a bearing block (37) for the lower control arm (1) and a bearing block (36) for the upper control arm (2) are formed integrally on or attached to the upper wall (51) or lower wall (52) respectively of the central body designed as a box (35).

4. Auxiliary frame according to any of claims 1 to 3, **characterised in that** fastenings are provided for a stabiliser (40) on the auxiliary frame (6).

5. Auxiliary frame according to any of claims 1 to 4, **characterised in that** the arms (28, 29) and the central body (35) are made of aluminium.

## Revendications

1. Berceau auxiliaire pour la suspension de roue avant ou arrière d'un véhicule automobile, qui est monté contre la carrosserie du véhicule en au moins quatre points de fixation (7, 8), chaque support d'essieu (4) étant articulé par au moins un bras oscillant (1, 2) sur le berceau auxiliaire, et se composant de quatre bras (36, 37), qui sont montés par paires sur chaque côté du véhicule en s'avançant en saillie par rapport à un corps central (35) et sont fixés contre celui-ci et dont les extrémités libres (31, 32) sont fixées contre le chassis ou la caisse du véhicule, les deux bras d'une paire formant des zones partielles d'un double bras (30) en forme de U, dont la zone arquée (33) est fixée contre le corps central (35), et dans lequel berceau, le corps central est un caisson (35) ouvert sur les deux côtés, de sorte qu'une zone arquée (33) d'un double bras (28, 29) s'engage respectivement dans les ouvertures latérales, **caractérisé en ce que** le caisson (35) a la forme d'un parallélépipède allongé, qui est fermé dans sa partie centrale et s'ouvre latéralement en forme d'entonnoir, et **en ce que** les doubles bras (28, 29) sont formés chacun par un tube (30), de telle sorte que les zones arquées (33) s'engagent sur toute leur longueur dans l'ouverture en forme d'entonnoir jusqu'à l'axe du tube et **en ce que** la hauteur du caisson (35) correspond à l'épaisseur du tube.

2. Berceau auxiliaire selon la revendication 1, **caractérisé en ce qu'**au moins un bras oscillant (1, 2), articulé contre le berceau auxiliaire, d'un support d'essieu (4) est articulé contre le corps central (35).

3. Berceau auxiliaire selon la revendication 2, **caractérisé en ce que** chaque support d'essieu (4) est articulé contre le berceau auxiliaire (6) par un bras oscillant supérieur (2) et par un bras oscillant inférieur (1), un support de palier (37) pour le bras oscillant inférieur (1) et un support de palier (36) pour le bras oscillant supérieur (2) étant formé ou fixé respectivement contre la paroi supérieure (51) et contre la paroi inférieure (52) du corps central en forme de caisson (35).

4. Berceau auxiliaire selon l'une quelconque des revendications 1 à 3, **caractérisé en ce que** des fixations (53) pour une barre stabilisatrice (40) sont prévues sur le berceau auxiliaire (6).

5. Berceau auxiliaire selon l'une quelconque des revendications 1 à 4, **caractérisé en ce que** les bras (28, 29) et le corps central (35) sont formés d'aluminium.
